# FASCICULE DE BREVET EUROPEEN

(11) **EP 3 669 714 B1**
(45) Date de publication et mention de la délivrance du brevet: **03.11.2021**
(21) Numéro de dépôt: 19214576.1
(22) Date de dépôt: 09.12.2019
(51) Int. Cl.: A47J 27/21

(54) **BOUILLOIRE ETANCHE ISOLEE ELECTRIQUEMENT POUR SON LAVAGE SOUS L'EAU**
DICHTER ELEKTRISCH ISOLIERTER WASSERKOCHER, DER UNTER WASSER GEREINIGT WERDEN KANN
ELECTRICALLY INSULATED SEALED BOILER FOR WASHING IN WATER

(30) Priorité: 17.12.2018 FR 1873081
(43) Date de publication de la demande: 24.06.2020
(73) Titulaire: SEB S.A., 69130 Ecully (FR)
(72) Inventeur: DELRUE, Olivier, 21260 SELONGEY (FR)
(74) Mandataire: SEB Développement

(56) Documents cités:
- EP-A1- 2 805 649
- GB-A- 2 249 472
- US-A1- 2010 314 379

## Description

### Domaine technique

La présente invention concerne une bouilloire électrique et vise à améliorer l'étanchéité et l'isolation électrique de la bouilloire afin de pouvoir la laver complètement sous l'eau, sans nuire au bon fonctionnement de l'appareil et sans danger d'électrocution pour l'utilisateur.

### Etat de la technique

Diverses conceptions de bouilloires étanches sont connues de l'homme du métier. A titre d'exemple, la demande internationale de brevet publiée sous le numéro WO2009/109762A1 décrit une bouilloire qui comprend un corps, une plaque chauffante, un boîtier inférieur dans lequel est logé un dispositif de commande interne et des moyens d'étanchéité mis en oeuvre entre le corps, la plaque chauffante et le boîtier inférieur. Cette bouilloire comporte un interrupteur de commande agencé de manière étanche sur le boitier inférieur. L'interrupteur de commande est situé dans une partie basse de la bouilloire, ce qui le rend difficilement accessible pour l'utilisateur qui, en outre, doit actionner ledit bouton par un appui horizontal. Ainsi, une telle bouilloire n'est pas ergonomique. Un autre inconvénient sur ce type de bouilloire est qu'en cas de défectuosité des moyens d'étanchéité, notamment lors d'un usage fréquent, l'eau pénètre dans le boîtier inférieur, ce qui endommage le dispositif de commande interne et peut le détruire complètement en générant un court-circuit électrique. Le remplacement du dispositif de commande interne voire de la bouilloire entière peut s'avérer nécessaire alors que le remplacement des moyens d'étanchéité seuls aurait pu suffire.

La demande de brevet chinoise publiée sous le numéro CN201213711 divulgue une bouilloire comportant une poignée sur laquelle est agencé un dispositif de commande externe, ce qui la rend plus ergonomique. Cependant, ce dispositif de commande externe n'est pas étanche.

On connait également du document GB2249472 une bouilloire électrique.

La demanderesse a déjà pallié les divers inconvénients précités en développant une bouilloire présentant les perfectionnements objets des brevets européens EP2805649B1 et EP2805650B1. Cette bouilloire comprend un corps muni d'une poignée, une plaque chauffante, un boîtier inférieur étanche dans lequel est logé un dispositif de commande interne de la plaque chauffante et un boitier de commande externe étanche agencé sur la poignée. Le boitier de commande externe comporte un dispositif de commande externe relié électriquement par au moins un câble au dispositif de commande interne et configuré pour actionner manuellement ledit dispositif de commande interne. Des moyens d'étanchéité sont prévus entre le boîtier inférieur et le câble, d'une part, et entre le boîtier de commande et le câble, d'autre part, ces moyens d'étanchéité étant mis en œuvre par des presse-étoupes ou des surmoulages de résine ou de silicone sur les extrémités du câble.

Bien que cette conception de bouilloire selon EP2805649B1 et EP2805650B1 améliore grandement les performances d'étanchéité et d'isolation électrique en comparaison des bouilloires antérieures, des risques de défectuosité peuvent survenir avec l'usage, notamment en cas de démontage de la bouilloire pour le remplacement d'une pièce défectueuse dans le boîtier inférieur ou dans le boîtier de commande. En effet, l'étanchéité entre le câble et le boîtier inférieur ou entre le câble et le boîtier de commande peut devenir défectueuse une fois le remontage de la bouilloire effectué, ce qui peut engendrer des défauts d'isolation électrique au cas où de l'eau pénètre dans l'un ou l'autre desdits boîtiers lors du lavage de la bouilloire. De même, en cas de dégradation de la gaine du câble, l'âme conductrice du câble peut être apparente et engendrer un défaut d'isolation électrique lorsque de l'eau vient en contact avec ledit câble. Par ailleurs, la bouilloire est soumise à un test d'étanchéité avant sa mise en service qui, selon cette mise en œuvre, nécessite de vérifier l'étanchéité au niveau du boîtier inférieur, d'une part, et au niveau du boîtier de commande, d'autre part, ce qui augmente les coûts de contrôle qualité d'une telle bouilloire.

### Exposé de l'invention

L'invention pallie les inconvénients précités en mettant en oeuvre une bouilloire selon la revendication 1.

Ainsi, l'étanchéité entre le câble et le boîtier inférieur, d'une part, et entre le câble et le boîtier de commande, d'autre part, est préservé malgré les démontages et remontages éventuels entre lesdits éléments, grâce à la présence du conduit qui reçoit le câble et qui raccorde de manière étanche le boîtier inférieur et le boîtier de commande pour former la zone étanche. En outre, la bouilloire reste convenablement isolée électriquement, y compris lorsque la gaine du câble est abimée et que l'âme conductrice dudit câble est apparente. Par ailleurs, la création de cette zone étanche permet la réalisation d'un seul test d'étanchéité pour l'ensemble, ce qui réduit les coûts de contrôle qualité de la bouilloire. Selon une réalisation de la bouilloire, le dispositif de commande interne comporte une alimentation électrique non isolée. Une telle alimentation électrique non isolée peut être, à titre d'exemple non limitatif, une alimentation capacitive, une alimentation résistive ou une alimentation à découpage de type BUCK ou BOOST. L'utilisation d'une alimentation électrique non isolée est rendue possible grâce à la constitution de la zone étanche assurant l'isolation électrique de la bouilloire. Bien entendu, il serait possible de prévoir des variantes de réalisation de la bouilloire selon l'invention pour lesquelles le dispositif de commande interne comporterait une alimentation électrique isolée, ce qui augmenterait cependant le coût de fabrication de la bouilloire.

Selon une réalisation de la bouilloire, le conduit est réalisé en une matière souple, notamment en silicone. L'utilisation d'autres matières souples est envisageable, de même que l'utilisation de matière rigide. L'avantage d'un conduit souple plutôt que d'un conduit rigide est toutefois de pouvoir le courber facilement pour lui donner une forme correspondant à celle de la poignée afin de le placer dans celle-ci. Un autre avantage d'un conduit souple, notamment en silicone, est que cette souplesse participe à l'étanchéité entre le conduit et le boîtier inférieur, d'une part, et entre le conduit et le boîtier de commande externe, d'autre part. En effet, il est ainsi possible d'emboîter de manière serrée et étanche le conduit sur un embout du boîtier inférieur et sur un embout du boîtier de commande externe.

Selon une réalisation de la bouilloire, le conduit présente un diamètre supérieur à 3 mm, de préférence supérieur à 5 mm. Cela évite les échauffements du câble et facilite sa mise en place et son retrait du conduit, en particulier en la présence de connecteurs aux extrémités du câble pour le raccordement desdites extrémités au dispositif de commande externe et au dispositif de commande interne.

Selon une réalisation de la bouilloire, le boitier de commande externe comporte une excroissance tubulaire sur laquelle le conduit est connecté de manière étanche. De préférence, un élément de connexion rigide est agencé entre l'excroissance tubulaire et le conduit, mais on pourrait prévoir une connexion directe entre l'excroissance tubulaire et le conduit, selon une autre variante de réalisation.

Selon une réalisation de la bouilloire, le dispositif de commande externe comporte un organe de manœuvre et un interrupteur, le boitier de commande externe comportant une paroi souple agencée entre l'organe de manœuvre et l'interrupteur.

Selon une réalisation de la bouilloire, le boitier de commande externe comporte un corps souple. En outre, le corps souple comporte une ouverture traversante munie d'une lèvre périphérique. En outre, le boitier de commande externe comporte un châssis et un couvercle de fermeture, la lèvre périphérique étant pincée entre le couvercle et le châssis pour rendre le corps souple étanche. Selon une réalisation de la bouilloire, le dispositif de commande interne comporte un capteur de température agencé sous la plaque chauffante. Ladite plaque chauffante participe à la fermeture étanche de la partie supérieure du boitier inférieur. Ainsi, le capteur de température permet de mesurer la température à l'intérieur du boitier inférieur.

Selon une réalisation de la bouilloire, le boîtier inférieur comporte un orifice destiné à tester l'étanchéité du boîtier inférieur et du boitier de commande reliés par le conduit, l'orifice étant fermé étanchement par un bouchon.

Selon une réalisation de la bouilloire, celle-ci comporte un couvercle inférieur qui est agencé sur le boitier inférieur, le couvercle inférieur maintenant le bouchon sur l'orifice.

### Brève description des figures

Les caractéristiques et avantages de l'invention apparaîtront à la lecture de la description suivante s'appuyant sur des figures, parmi lesquelles :
[Fig. 1] La figure 1 est une vue d'une bouilloire selon l'art antérieur, dont une grande partie des caractéristiques techniques s'applique à la bouilloire objet de l'invention ;
[Fig. 2] La figure 2 est une vue éclatée mettant en évidence, notamment, le boîtier inférieur et le boîtier de commande externe de la bouilloire objet de l'invention ;
[Fig. 3] La figure 3 est une vue montrant de dessous le boîtier inférieur ;
[Fig. 4] La figure 4 est une vue montrant en coupe le boîtier de commande externe.
[Fig. 5] la figure 5 est une vue en coupe d'une bouilloire selon l'invention, montrant notamment le conduit reliant le boîtier inférieur au boîtier de commande.

### Description détaillée de l'invention

Dans la suite de la description, les mêmes références sont utilisées pour décrire les mêmes caractéristiques ou leurs équivalents selon les diverses conceptions possibles de la bouilloire selon l'invention.

Dans la suite de la description, les termes tels que « haut », « bas », « inférieur », « supérieur », « vertical », « horizontal » ... seront utilisés en considération de la position normale de la bouilloire reposant sur un plan de travail horizontal.

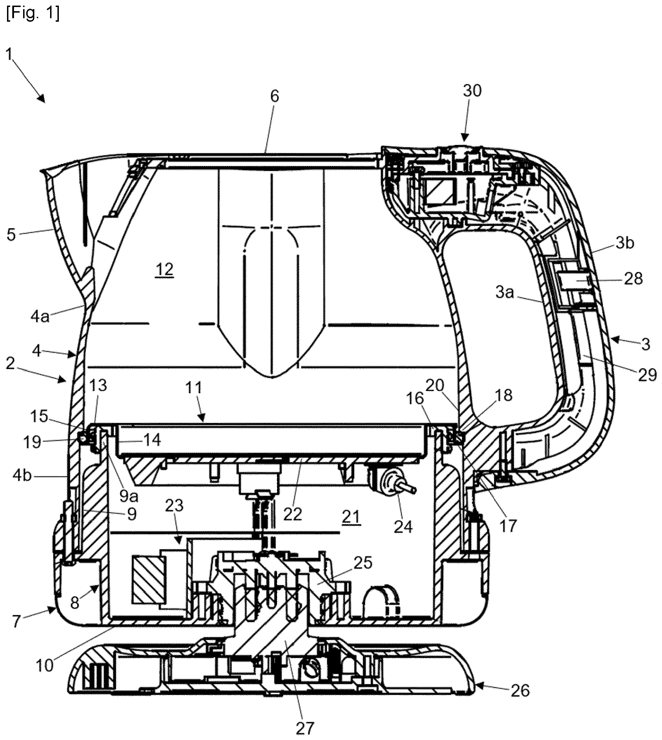

Sur la figure 1 est illustrée une bouilloire dont les caractéristiques techniques sont détaillées dans le brevet européen EP2805650B1. Ces caractéristiques techniques correspondent en très grande partie à celles de la bouilloire selon l'invention. Ainsi, la description qui suit en regard de la figure 1 s'applique à la bouilloire objet de l'invention.

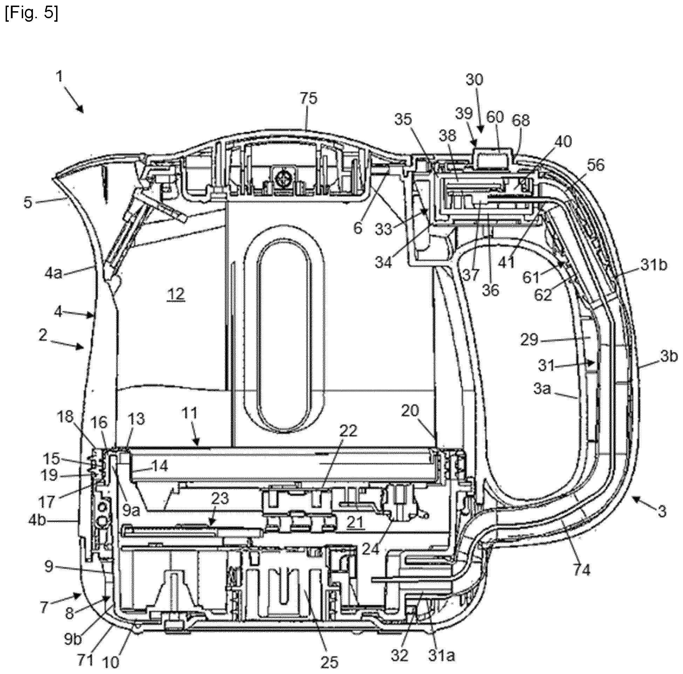

Sur la figure 1, la bouilloire 1 comprend un corps 2 en matière plastique qui assure une très faible conduction thermique afin d'éviter que l'utilisateur ne se brûle lorsqu'il manipule la bouilloire contenant de l'eau bouillante. Pour permettre la manipulation de la bouilloire 1, celle-ci comprend une poignée 3 fixée au corps 2. Le corps 2 comprend une paroi externe 4 périphérique, de préférence de forme circulaire, qui s'étend verticalement lorsque la bouilloire 1 repose sur un plan de travail horizontal, et dont la partie supérieure 4a comprend un bec verseur 5 permettant de verser l'eau bouillante lorsque le corps 2 est incliné. Cette partie supérieure 4a comprend une ouverture 6 qui reçoit de manière amovible un couvercle de fermeture 75 (illustré sur la figure 5).

Tel qu'illustré sur la figure 1, la bouilloire 1 comprend un boîtier inférieur 7 également dans une matière plastique assurant une faible conduction thermique. Ce boîtier inférieur 7 comprend un contenant 8 muni d'une paroi périphérique 9 et d'un fond 10. La paroi périphérique 9 présente une forme similaire à la paroi externe 4 du corps 2, en l'espèce une forme circulaire, et vient se loger dans la partie inférieure 4b de la paroi externe 4. Cette paroi périphérique 9 s'étend vers le haut et comporte une partie supérieure 9a.

Tel qu'illustré sur la figure 1, la bouilloire 1 comprend une plaque chauffante 11 qui dispose d'une très bonne conduction thermique et constitue le fond d'une chambre 12 permettant de contenir de l'eau dans le corps 2 afin de la faire bouillir. La plaque chauffante 11 comprend un rebord 13 périphérique de forme semblable à la paroi périphérique 9 et à la paroi externe 4, en l'occurrence de forme circulaire. Ce rebord 13 comprend un bord interne 14 et un bord externe 15, de forme circulaire, qui sont tous les deux recourbés vers le bas en s'étendant sur une longueur permettant de recevoir la partie supérieure 9a de la paroi périphérique 9, entre lesdits bords interne 14 et externe 15, par l'intermédiaire d'un joint d'étanchéité interne 16 présentant une forme annulaire. Ce joint d'étanchéité interne 16 assure l'assemblage et l'étanchéité entre le rebord 13 de la plaque chauffante 11 et la partie supérieure 9a de la paroi périphérique 9 du boîtier inférieur 7.

Tel qu'illustré sur la figure 1, le bord externe 15 du rebord 13 comprend à son extrémité inférieure un épaulement externe 17 qui s'étend radialement à la périphérie de la plaque chauffante 11. En outre, la partie inférieure 4b de la paroi externe 4 du corps 2 comprend sur une face interne 20 un épaulement interne 18 agencé de sorte qu'il soit disposé au-dessus de cet épaulement externe 17 lorsque le boîtier interne 7 et la plaque chauffante 11 sont en position dans le corps 2. Par ailleurs, un joint d'étanchéité externe 19 de forme annulaire assure un montage serré et étanche entre ledit bord externe 15 et ladite face interne 20. Les présences de l'épaulement externe 17 et de l'épaulement interne 18 délimitent les positions d'arrêt du joint d'étanchéité externe 19 sur ledit bord externe 15 et sur ladite face interne 20.

Tel qu'illustré en figure 1, la mise en œuvre de cette étanchéité entre le corps 2, le boîtier inférieur 7 et la plaque chauffante 11 par l'intermédiaire du joint d'étanchéité interne 16 et du joint d'étanchéité externe 19, permet de définir une chambre intérieure 21 étanche qui permet notamment le logement d'une résistance chauffante 22 fixée sous la plaque chauffante 11, d'un dispositif de commande interne 23 et d'un capteur de température 24 fixé également sous la plaque chauffante 11 et permettant de mesurer la température de cette chambre intérieure 21. Le boîtier inférieur 7 comprend un connecteur électrique femelle 25, agencé de manière étanche dans le fond 10 dudit boîtier inférieur 7. Ce connecteur électrique 25 est raccordé au dispositif de commande interne 23 et permet sa connexion électrique à une base 26 qui comprend un connecteur électrique mâle 27 complémentaire au connecteur électrique femelle 25. Cette base 26 est configurée pour être raccordée électriquement à une source électrique externe par le biais d'une prise de courant (non illustrée).

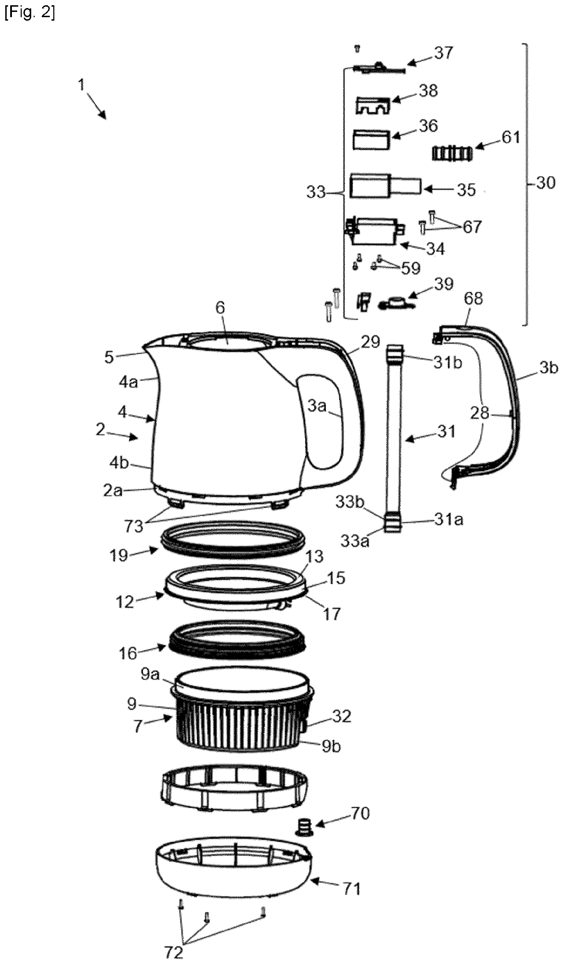

L'homme du métier pourra se référer au brevet EP2805650B1 pour plus de précision sur la mise en œuvre de l'assemblage et de l'étanchéité entre le boîtier inférieur 7 et le corps 2 sur la bouilloire 1. Bien évidemment, des variantes restent envisageables sans sortir du cadre de la présente invention. En regard des figures 2 et 5, on retrouve les caractéristiques décrites précédemment à l'appui de la figure 1, et notamment la présence du corps 2, du boîtier inférieur 7, de la paque chauffante 11 avec son rebord 13, du joint d'étanchéité interne 16 assurant l'assemblage étanche par emboîtement entre ledit rebord 13 et la partie supérieure 9a de la paroi périphérique 9 du boîtier inférieur 7, et du joint d'étanchéité externe 19 qui se positionne autour du bord externe 15 du rebord 13 et vient en butée contre l'épaulement externe 17 sur ledit rebord 13. Sur ces figures 2 et 5, la conception du joint d'étanchéité externe 19 diffère de celle de la figure 1, le principe restant toutefois le même. En outre, sur ces figures 2 et 5, le boîtier inférieur 7 comporte une forme légèrement différente de celle de la figure 1 et présente des caractéristiques techniques additionnelles relatives à l'invention, comme cela apparaîtra dans la suite de la description.

En regard des figures 1, 2 et 5, la poignée 3 de la bouilloire 1 est constituée d'une première partie 3a intégrée complètement au corps 2, et d'une seconde partie 3b amovible. Pour cela, la seconde partie 3b comprend des pattes de fixation 28 (figures 1 et 2) qui coopèrent avec la première partie 3a de cette poignée 3. Cette première partie 3a de la poignée 3 comprend un évidement interne 29. Un boîtier de commande externe étanche 30 est agencé en partie supérieure de la poignée 3 et permet l'activation du dispositif de commande interne 23 logé dans le boîtier inférieur 7.

La description qui suit va maintenant s'attacher à décrire plus précisément les caractéristiques techniques propres à l'invention, à l'appui des figures 2 à 5. Tel qu'illustré sur les figures 2 et 5, l'évidement interne 29 sur la première partie 3a de la poignée 3 permet le logement et le passage d'un conduit 31. Le conduit 31 présente un diamètre de trois millimètres (3 mm), de préférence de cinq millimètres (5 mm), l'évidement interne 29 étant dimensionné en conséquence. Ce conduit 31 est réalisé dans un matériau souple, de préférence du silicone, ce qui permet de lui donner une forme similaire à celle de l'évidement interne 29 dans lequel ledit conduit 31 est logé. Il serait possible d'utiliser un conduit 31 rigide et disposant d'une forme identique à celle de l'évidement interne 29. L'utilisation de cette matière silicone offre également une isolation électrique au conduit 31 et participe à l'étanchéité pour le raccordement du boîtier inférieur 7 au boîtier de commande externe 30 étanche, comme cela apparaîtra dans la suite de la description.

Tel qu'illustré sur les figures 2, 3 et 5, le boîtier inférieur 7 comprend un embout 32 qui s'étend radialement vis-à-vis d'une partie inférieure 9b de la paroi périphérique 9. L'extrémité inférieure 31a du conduit 31 passe au travers de la partie inférieure 4b de la paroi externe 4 du corps 2 et se positionne à l'extérieur du boîtier inférieur 7. L'extrémité inférieure 31a du conduit 31 est montée serrée par emboîtement sur cet embout 32, ce qui assure une étanchéité entre le boîtier inférieur 7 et le conduit 31 du fait de l'utilisation d'une matière silicone. Il est aussi possible de prévoir des bourrelets 33a, 33b assurant un resserrage de l'extrémité inférieure 31a du conduit 31 qui est emboîtée sur l'embout 32, voire un collier de serrage (non illustré). Ainsi, le boitier inférieur 7 communique de manière étanche avec le conduit 31, ce qui permet le passage d'un câble 74 dans ledit conduit 31 pour son raccordement au dispositif de commande interne 23 logé à l'intérieur dudit boîtier inférieur 7.

Tel qu'illustré en regard des figures 2, 4 et 5, le boîtier de commande externe 30 étanche comprend un dispositif de commande externe 33 qui comprend un châssis 34, un corps 35 et un couvercle 36. Le châssis 34 et le couvercle 36 sont conçus dans un matériau rigide, de préférence une matière plastique, et le corps 35 est conçu dans un matériau souple, de préférence une matière silicone. Le dispositif de commande externe 33 comprend également une carte circuit imprimé 37, un capot 38 et un organe de manœuvre 39. La carte circuit imprimé 37 intègre un interrupteur marche/arrêt 40, de type switch ON/OFF, et une broche de connexion 41 qui s'étend longitudinalement par rapport à un bord 42 sur ladite carte circuit imprimé 37.

Tel qu'illustré en regard des figures 2, 4 et 5, le couvercle 36 définit une première chambre 43 ouverte en sa partie supérieure 43a et dimensionnée pour recevoir la carte circuit imprimé 37, seule la broche de connexion 41 passant au travers d'une paroi de contour 44 dudit couvercle 36. Le capot 38 définit une seconde chambre 45 ouverte en sa partie inférieure 45a et dimensionnée pour recevoir également la carte circuit imprimé 37 et pour se loger dans la première chambre 43 en fermant la partie supérieure 43a de ladite première chambre 43, la partie inférieure 45a de la seconde chambre 45 venant en appui contre un fond 46 dudit couvercle 36. Le capot 38 comporte un fond 47 qui ferme ladite partie supérieure 43a et comporte un trou débouchant 48 dans lequel se positionne un bouton 49 de l'interrupteur marche/arrêt 40. La broche de connexion 41 de la carte circuit imprimé 37 passe également au travers d'une paroi de contour 50 dudit capot 38. La carte circuit imprimé 37 comprend une diode électroluminescente (non illustrée) qui, de préférence, éclaire en blanc lorsque le bouton 49 est actionné. En outre, le capot 38 est dans une matière présentant une teinte colorée, par exemple une teinte bleue ou rouge, l'allumage de la diode électroluminescente associé à la teinte du capot 38 donnant un fond lumineux de la couleur dudit capot 38, que l'utilisateur visualise en allumant la bouilloire 1.

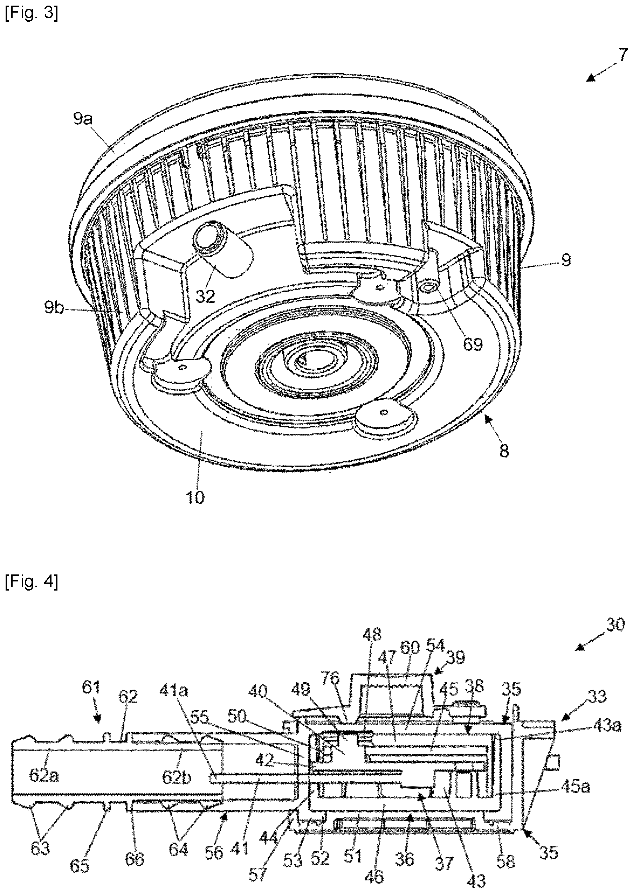

Tel qu'illustré en regard des figures 2 et 4, le corps 35 est creux et muni d'une ouverture 51 délimitée par une lèvre périphérique 52 sur sa paroi inférieure 53, permettant ainsi l'accès à l'intérieur dudit corps 35 et de venir y loger l'ensemble prémonté formé du couvercle 36, de la carte circuit imprimé 37 et du capot 38, tel qu'expliqué précédemment et qu'illustré sur la figure 4. Une fois le montage réalisé, le bouton 49 de l'interrupteur marche/arrêt 40 est en contact avec le dessous de la paroi supérieure 54 du corps 35. La broche de connexion 41 passe au travers d'une paroi de contour 55 du corps 35, de manière serrée et étanche grâce à l'utilisation d'une matière silicone. Une excroissance tubulaire 56, également en matière silicone, forme de préférence une seule et même pièce avec le corps 35 et prolonge latéralement la paroi de contour 55 dudit corps 35, la broche de connexion 41 étant logée dans cette excroissance tubulaire 56, comme l'illustrent les figures 4 et 5. Le montage ainsi réalisé et illustré notamment en figure 4 permet une séparation physique entre le corps 35 en matière silicone et la carte circuit imprimé 37, ce qui avantageusement assure que la matière silicone dudit corps 35 ne se charge pas électriquement et, ainsi, protège des décharges électrostatiques.

Tel qu'illustré en regard des figures 2, 4 et 5, le châssis 34 est creux et dimensionné pour recevoir l'ensemble prémonté formé du couvercle 36, de la carte circuit imprimé 37, du capot 38 et du corps 35, tel qu'expliqué précédemment et qu'illustré sur les figures 4 et 5. L'excroissance tubulaire 56 passe au travers d'une paroi de contour 57 dudit châssis 34, avec la broche de connexion 41 logée dans ladite excroissance tubulaire 56. La lèvre périphérique 52 du corps 35 souple est prise en sandwich entre le fond 46 du couvercle 36 et un fond 58 dudit châssis 34, ces deux fonds 46, 58 étant fixés ensemble par des vis de fixation 59 (illustrées en figure 2), ce vissage entre lesdits fonds 46, 58 permettant de pincer la lèvre périphérique 52 du corps 35 et d'assurer une étanchéité du dispositif de commande externe 33. Les vis de fixation 59 passent au travers du fond 58 du châssis 34 et viennent en prise dans des taraudages non débouchant (non illustrés) dans le fond 46 du couvercle 36, afin de ne pas compromettre l'étanchéité du dispositif de commande externe 33. L'organe de manœuvre 39 est monté sur le châssis 34 et comporte un plot 76 disposé en contact avec le dessus de la paroi supérieure 54 du corps 35, dans l'alignement du bouton 49 de l'interrupteur marche/arrêt 40. L'organe de manœuvre 39 comporte un poussoir 60 qui peut être pressé avec un doigt de l'utilisateur, une pression sur le poussoir 60 permettant d'activer le plot 76 qui s'enfonce et déforme la paroi supérieure 54 du corps 35, ce qui permet d'actionner ledit bouton 49 de l'interrupteur marche/arrêt 40.

Tel qu'illustré en regard des figures 2, 4 et 5, un élément de connexion 61 présente la forme d'un embout tubulaire 62 réalisé dans un matériau rigide, notamment une matière plastique, les deux portions d'extrémité 62a, 62b de cet embout tubulaire 62 comportant des bourrelets externes 63, 64. Cet embout tubulaire 62 est dimensionné pour être emboîté en force, d'un côté, dans l'excroissance tubulaire 56 et, de l'autre côté, dans l'extrémité supérieure 31b du conduit 31. La souplesse de la matière silicone utilisée pour le conduit 31 et l'excroissance tubulaire 56 et la présence des bourrelets externes 63, 64 sur l'embout tubulaire 62 rigide, permettent d'assurer un assemblage étanche entre l'extrémité supérieure 31b du conduit 31, l'élément de connexion 61 et le boîtier de commande externe 30. Des butées circulaires 65, 66 sur l'embout tubulaire 62 délimitent les positions d'arrêt de l'extrémité supérieure 31b du conduit et de l'excroissance tubulaire 56 qui sont emboîtées sur ledit embout tubulaire 62. L'extrémité 41a de la broche de connexion 41 de la carte circuit imprimé 37 est logée dans l'excroissance tubulaire 56, à proximité de l'embout tubulaire 62, comme l'illustrent les figures 4 et 5. Cela permet de venir raccorder électriquement, avec une parfaite étanchéité, l'extrémité d'un câble 74 passant dans le conduit 31, avec la broche de connexion 41 de la carte circuit imprimé 37, ledit câble 74 ayant sa seconde extrémité raccordée au dispositif de commande interne 23 dans le boîtier inférieur 7. En outre, la souplesse de l'excroissance tubulaire 56 permet de la positionner convenablement dans la poignée, avec l'élément de connexion 61 qui est quant à lui rigide, comme le montre la figure 5. Le raccordement de la broche de connexion 41 avec le câble 74 est de préférence réalisé par un connecteur (non illustré) qui est relié à l'extrémité dudit câble 74 et qui s'enfiche de manière amovible sur ladite broche de connexion 41. Cela facilite le démontage entre le conduit 31, le câble 74 et le boîtier de commande externe 30, en cas de défectuosité d'un composant dudit boîtier de commande externe 30.

Une fois l'extrémité inférieure 31a du conduit 31 raccordée de manière étanche avec l'embout 32 du boîtier inférieur 7 d'une part et l'extrémité supérieure 31b du conduit 31 raccordée de manière étanche avec le boîtier de commande externe 30 d'autre part, l'ensemble forme une zone complètement étanche, du fait que le boîtier inférieur 7 est monté de manière étanche avec le corps 2 de la bouilloire 1, comme expliqué précédemment, et que le boîtier de commande externe 30 est en lui-même étanche de par sa conception précitée. Cette zone étanche est ainsi isolée électriquement, ce qui permet avantageusement l'utilisation d'une alimentation électrique non isolée sur le dispositif de commande interne 23 dans le boîtier inférieur 7, sans aucun risque d'électrocution durant la manipulation de la bouilloire 1 et de l'organe de manœuvre 39.

Le châssis 34 du dispositif de commande externe 33 est logé dans l'évidement interne 29 de la première partie 3a de la poignée 3 et fixé à l'intérieur de cet évidement 29 au moyen de vis de fixation 67 (illustrées en figure 2). Tel qu'illustré en figures 2 et 5, la seconde partie 3b de la poignée 3 comprend une ouverture 68 qui permet le passage du poussoir 60 de l'organe de manœuvre 39, lors de son assemblage avec la première partie 3a de la poignée. La souplesse du conduit 31 qui est raccordé de manière étanche au boîtier de commande externe 30, permet sa déformation afin de le placer convenablement dans l'évidement interne 29 de la première partie 3a de la poignée avant la mise en place de la seconde partie 3b de cette poignée 3.

L'étanchéité de l'ensemble constitué du boîtier inférieur 7, du conduit 31 et du boîtier de commande externe 30, formant ladite zone étanche, peut être contrôlée grâce à la présence d'un orifice 69 agencé sur le fond 10 du contenant 8 du boîtier inférieur 7, tel qu'illustré en figure 3, ce qui permet d'injecter de l'air sous pression et de contrôler les fuites éventuelles sur ledit ensemble, avant la mise sur le marché de la bouilloire 1. Une fois la bouilloire 1 contrôlée, cet orifice 69 est fermé de manière étanche par un bouchon 70, illustré en figure 2, en matériau élastomère. Le maintien en position du bouchon 70 est garanti grâce à la présence d'un couvercle inférieur 71 qui est fixé avec le fond 10 dudit contenant 8 au moyen de vis de fixation 72, ledit couvercle inférieur 71 étant en outre assemblé avec l'extrémité inférieure 2a du corps 2 grâce à des pattes d'assemblage 73.

D'autres caractéristiques sont envisageables dans le cadre de l'invention. On peut prévoir des variantes de conception de l'étanchéité entre le boîtier inférieur 7 et le corps 2 de la bouilloire 1, et aussi prévoir des variantes de conception du boîtier de commande externe 30, tout en conservant la constitution de la zone étanche entre le boîtier inférieur 7, le conduit 31 et le boîtier de commande externe 30 pour le raccordement électrique du dispositif de commande interne 23 disposé dans le boîtier inférieur 7 au dispositif de commande externe 33 disposé dans le boîtier de commande externe 30, au moyen d'un câble logé dans ledit conduit 31.

## Revendications

1. Bouilloire (1) comprenant un corps (2) muni d'une poignée (3) comportant un évidement interne (29), une plaque chauffante (11), un boîtier inférieur (7) étanche dans lequel est logé un dispositif de commande interne (23) et un boitier de commande externe (30) étanche agencé sur la poignée (3), ledit boitier de commande externe (30) comportant un dispositif de commande externe (33) relié électriquement par au moins un câble (74) au dispositif de commande interne (23) et configuré pour actionner manuellement ledit dispositif de commande interne (23), **caractérisé en ce que** le boitier inférieur (7) est relié au boitier de commande externe (30) de manière étanche par un conduit (31) électriquement isolant dans lequel est agencé l'au moins un câble (74) et **en ce que** l'évidement interne (29) de la poignée (3) permet le logement et le passage du conduit (31), le boitier inférieur (7), le boitier de commande externe (30) et le conduit (31) formant une zone étanche.

2. Bouilloire (1) selon la revendication 1, **caractérisée en ce que** le dispositif de commande interne (23) comporte une alimentation électrique non isolée.

3. Bouilloire (1) selon l'une quelconque des revendications 1 à 2, **caractérisée en ce que** le conduit (31) est réalisé en une matière souple.

4. Bouilloire (1) selon la revendication 3, **caractérisée en ce que** la matière souple est du silicone.

5. Bouilloire (1) selon l'une quelconque des revendications 1 à 4, **caractérisée en ce que** le conduit (31) présente un diamètre supérieur à 3 mm, de préférence supérieur à 5 mm.

6. Bouilloire (1) selon l'une quelconque des revendications 1 à 5, **caractérisée en ce que** le boitier de commande externe (30) comporte une excroissance tubulaire (56) sur laquelle le conduit (31) est connecté de manière étanche.

7. Bouilloire (1) selon la revendication 6, **caractérisée en ce qu'**un élément de connexion (61) rigide est agencé entre l'excroissance tubulaire (56) et le conduit (31).

8. Bouilloire (1) selon l'une quelconque des revendications 1 à 7, **caractérisée en ce que** le dispositif de commande externe (33) comporte un organe de manœuvre (39) et un interrupteur marche/arrêt (40), le boitier de commande externe (30) comportant une paroi supérieure (54) souple agencée entre l'organe de manœuvre et l'interrupteur.

9. Bouilloire (1) selon l'une quelconque des revendications 1 à 8, **caractérisée en ce que** le boitier de commande externe (30) comporte un corps (35) souple.

10. Bouilloire (1) selon la revendication 9, **caractérisée en ce que** le corps (35) souple comporte une ouverture (51) traversante munie d'une lèvre périphérique (52).

11. Bouilloire (1) selon la revendication 10, **caractérisée en ce que** le boitier de commande externe (30) comporte un châssis (34) et un couvercle (36) de fermeture, la lèvre périphérique (52) étant pincée entre le couvercle (36) et le châssis (34) pour rendre le corps (35) souple étanche.

12. Bouilloire (1) selon l'une quelconque des revendications 1 à 11, **caractérisée en ce que** dispositif de commande interne (23) comporte un capteur de température (24) agencé sous la plaque chauffante (11).

13. Bouilloire selon l'une quelconque des revendications 1 à 12, **caractérisée en ce que** le boîtier inférieur (7) comporte un orifice (69) destiné à tester l'étanchéité du boîtier inférieur (7) et du boitier de commande externe (30) reliés par le conduit (31), l'orifice (69) étant fermé par un bouchon (70).

14. Bouilloire (1) selon la revendication 13, **caractérisée en ce qu'**elle comporte un couvercle inférieur (71) qui est agencé sur le boitier inférieur (7), le couvercle inférieur maintenant le bouchon (70) sur l'orifice (69).

## Patentansprüche

1. Wasserkocher (1), der einen Körper (2) umfasst, der mit einem Griff (3) versehen ist, der eine interne Aussparung (29) umfasst, eine Heizplatte (11), ein dichtes unteres Gehäuse (7), in dem eine interne Steuervorrichtung (23) aufgenommen ist, und ein dichtes externes Steuergehäuse (30), das an dem Griff (3) angeordnet ist, wobei das externe Steuergehäuse (30) eine externe Steuervorrichtung (33) umfasst, die elektrisch durch mindestens ein Kabel (74) an die interne Steuervorrichtung (23) angeschlossen ist, und konfiguriert ist, um von Hand die interne Steuervorrichtung (23) zu betätigen, **dadurch gekennzeichnet, dass** das untere Gehäuse (7) in dichter Form durch einen elektrisch isolierenden Kanal (31) an das externe Steuergehäuse (30) angeschlossen ist, in dem das mindestens eine Kabel (74) angeordnet ist, und dadurch, dass die interne Aussparung (29) des Griffes (3) die Aufnahme und die Durchführung des Kanals (31) erlaubt, wobei das untere Gehäuse (7), das externe Steuergehäuse (30) und der Kanal (31) eine dichte Zone bilden.

2. Wasserkocher (1) nach Anspruch 1, **dadurch gekennzeichnet, dass** die interne Steuervorrichtung (23) eine nicht isolierte Stromversorgung umfasst.

3. Wasserkocher (1) nach einem der Ansprüche 1 bis 2, **dadurch gekennzeichnet, dass** der Kanal (31) aus einem biegsamen Material gefertigt ist.

4. Wasserkocher (1) nach Anspruch 3, **dadurch gekennzeichnet, dass** das biegsame Material Silikon ist.

5. Wasserkocher (1) nach einem der Ansprüche 1 bis 4, **dadurch gekennzeichnet, dass** der Kanal (31) einen Durchmesser größer als 3 mm, vorzugsweise größer als 5 mm aufweist.

6. Wasserkocher (1) nach einem der Ansprüche 1 bis 5, **dadurch gekennzeichnet, dass** das externe Steuergehäuse (30) eine rohrförmige Ausstülpung (56) umfasst, auf der der Kanal (31) in dichter Form verbunden ist.

7. Wasserkocher (1) nach Anspruch 6, **dadurch gekennzeichnet, dass** ein starres Verbindungselement (61) zwischen der rohrförmigen Ausstülpung (56) und dem Kanal (31) angeordnet ist.

8. Wasserkocher (1) nach einem der Ansprüche 1 bis 7, **dadurch gekennzeichnet, dass** die externe Steuervorrichtung (33) ein Handhabungsorgan (39) und einen Ein/Aus-Schalter (40) umfasst, wobei das externe Steuergehäuse (30) eine obere biegsame Wand (54) umfasst, die zwischen dem Handhabungsorgan und dem Schalter angeordnet ist.

9. Wasserkocher (1) nach einem der Ansprüche 1 bis 8, **dadurch gekennzeichnet, dass** das externe Steuergehäuse (30) einen biegsamen Körper (35) umfasst.

10. Wasserkocher (1) nach Anspruch 9, **dadurch gekennzeichnet, dass** der biegsame Körper eine durchgehende Öffnung (51) umfasst, die mit einer umlaufenden Lippe (52) versehen ist.

11. Wasserkocher (1) nach Anspruch 10, **dadurch gekennzeichnet, dass** das externe Steuergehäuse (30) ein Untergestell (34) und einen Verschlussdeckel (36) umfasst, wobei die umlaufende Lippe (52) zwischen dem Deckel (36) und dem Untergestell (34) geklemmt ist, um den biegsamen Körper (35) abzudichten.

12. Wasserkocher (1) nach einem der Ansprüche 1 bis 11, **dadurch gekennzeichnet, dass** die interne Steuervorrichtung (23) einen Temperatursensor (24) umfasst, der unter der Heizplatte (11) angeordnet ist.

13. Wasserkocher nach einem der Ansprüche 1 bis 12, **dadurch gekennzeichnet, dass** das untere Gehäuse (7) eine Öffnung (69) umfasst, die dazu bestimmt ist, die Dichtheit des unteren Gehäuses (7) und des externen Steuergehäuses (30) zu testen, die durch den Kanal (31) verbunden sind, wobei die Öffnung (69) durch einen Stopfen (70) verschlossen wird.

14. Wasserkocher (1) nach Anspruch 13, **dadurch gekennzeichnet, dass** er einen unteren Deckel (71) umfasst, der auf dem unteren Gehäuse (7) angeordnet ist, wobei der untere Deckel den Stopfen (70) auf der Öffnung (69) hält.

## Claims

1. Kettle (1) comprising a body (2) provided with a handle (3) having an inner cavity (29), a heating plate (11), a lower sealed casing (7) in which an internal control device (23) is housed, and a sealed external control casing (30) arranged on the handle (3), said external control casing (30) having an external control device (33) electrically connected by at least one cable (74) to the internal control device (23) and configured to manually activate said internal control device (23), **characterised in that** the lower casing (7) is connected to the external control casing (30) in a sealed manner by an electrically insulating duct (31) in which at least one cable (74) is arranged, and **in that** the inner cavity (29) of the handle (3) allows the housing and passage of duct (31), the lower casing (7), the external control casing (30) and the duct (31) forming a sealed zone.

2. Kettle (1) according to claim 1, **characterised in that** the internal control device (23) has a non-insulated electrical power supply.

3. Kettle (1) according to any one of claims 1 to 2, **characterised in that** the duct (31) is produced from a flexible material.

4. Kettle (1) according to claim 3, **characterised in that** the flexible material is silicone.

5. Kettle (1) according to any one of claims 1 to 4, **characterised in that** the duct (31) has a diameter greater than 3 mm, preferably greater than 5 mm.

6. Kettle (1) according to any one of claims 1 to 5, **characterised in that** the external control casing (30) has a tubular protrusion (56) onto which the duct (31) is connected in a sealed manner.

7. Kettle (1) according to claim 6, **characterised in that** a rigid connection element (61) is arranged between the tubular protrusion (56) and the duct (31).

8. Kettle (1) according to any one of claims 1 to 7, **characterised in that** the external control device (33) has an operating element (39) and an on/off switch (40), the external control casing (30) having a flexible upper wall (54) arranged between the operating element and the switch.

9. Kettle (1) according to any one of claims 1 to 8, **characterised in that** the external control casing (30) has a flexible body (35).

10. Kettle (1) according to claim 9, **characterised in that** the flexible body (35) has a through-opening (51) provided with a peripheral lip (52).

11. Kettle (1) according to claim 10, **characterised in that** the external control casing (30) has a frame (34) and a closing cover (36), the peripheral lip (52) being clamped between the cover (36) and the frame (34) in order to seal the flexible body (35).

12. Kettle (1) according to any one of claims 1 to 11, **characterised in that** the internal control device (23) has a temperature sensor (24) arranged under the heating plate (11).

13. Kettle according to any one of claims 1 to 12, **characterised in that** the lower casing (7) has an opening (69) intended for testing the sealing of the lower casing (7) and of the external control casing (30) connected by the duct (31), the opening (69) being closed by a plug (70).

14. Kettle (1) according to claim 13, **characterised in that** it has a lower cover (71) which is arranged on the lower casing (7), the lower cover holding the plug (70) on the opening (69).
